# EUROPÄISCHE PATENTANMELDUNG

(11) **EP 1 278 383 A2**
(43) Veröffentlichungstag der Anmeldung: **22.01.2003**
(21) Anmeldenummer: 02100702.6
(22) Anmeldetag: 13.06.2002
(51) Int. Cl.: H04Q 3/00

(54) **Verfahren, Vorrichtungen und Software-Programme zur Nachrichtenübermittlung zwischen Telekommunikations-Netzwerkelementen**

(30) Priorität: 10.07.2001 DE 10133472
(71) Anmelder: SIEMENS AKTIENGESELLSCHAFT, 80333 München (DE)
(72) Erfinder: Dannehr, Boris, 38550, Isenbüttel (DE); Schmidt, Andreas, 38114, Braunschweig (DE); Wuschke, Martin, 38527, Meine (DE)
(74) Vertreter: Wiedemann, Albert, Dipl.-Ing. (FH)

(57) **Zusammenfassung**

Es wird ein Verfahren zur Nachrichtenübermittlung zwischen Telekommunikations-Netzwerkelementen, die bei MMS (Multimedia Service)-Diensten beteiligt sind, vorgestellt, welches sich dadurch auszeichnet, daß Nachrichten von einem MMS-Relay über eine Schnittstelle (Ge*) mittels eines CAP (CAMEL Application Part) Protokolls an einen SCP/CSE (Service Control Point/CAMEL Service Environment) und/oder umgekehrt versendet werden. Weiterhin betrifft die Erfindung entsprechende Vorrichtungen sowie Software-Programme. Mittels der Erfindung kann insbesondere ein einfaches Online Charging bei Nutzung von MMS-Diensten realisiert werden.

## Beschreibung

Die Erfindung betrifft ein Verfahren zur Nachrichtenübermittlung zwischen Telekommunikations-Netzwerkelementen, die bei MMS (Multimedia Messaging Service)-Diensten beteiligt sind.

Des weiteren betrifft die Erfindung entsprechende Vorrichtungen sowie Software-Programme.

In der Mobilfunktechnologie ist es vorgesehen, mittels sog. Multimedia Messaging Service (MMS) Dienste neue Möglichkeiten der Zurverfügungstellung und Übertragung von Daten zu erschließen. MMS-Inhalte bestehen aus einem oder mehreren Elementen, wie Text, Sprache, Bildern und Video. Genaueres hierzu findet sich in den Publikationen von 3GPP (3^{rd} Generation Partnership Project) und ETSI (European Telecommunications Standards Institute), deren Inhalte - wie auch die der anderen im folgenden genannten Dokumente - hiermit explizit in die Offenbarung einbezogen werden. Hinsichtlich der Realisierung von Multimedia Messaging Service Diensten wird beispielsweise auf 3GPP TS 22.140 V4.0.1 und 3GPP TS 23.140 V4.1.0 verwiesen.

In den genannten Spezifikationen wird ein Online-Charging für MMS gefordert, d.h. Realisierung von Abrechnungsmöglichkeiten für die Inanspruchnahme der MMS-Dienste. Hierfür werden Gebührendatensätze (Charging Data Records) in verschiedenen beteiligten Netzwerkelementen erzeugt, insbesondere dem MMS-Relay, der mit einem MMS-Server verbunden ist. Der MMS-Server ist verantwortlich für die Zwischenspeicherung und die Handhabung von Nachrichten, während das MMS-Relay zwischen dem MMS-Server und dem jeweiligen Nutzer (User Agent) vermittelt und somit u.a. die Integration verschiedener Servertypen in verschiedenen Netzwerken ermöglicht. Wie ein solches Online-Charging realisiert werden könnte, ist jedoch in den genannten Spezifikationen nicht beschrieben. Ebenso ist es bisher nicht möglich, auf einfache Weise die Versendung von MMs (Multimedia Messages) anhand des noch vorhandenen Budgets des Nutzers zu kontrollieren. Allgemein ist die einfache Zurverfügungstellung von Subscriber-Informationen noch weitgehend ungelöst.

Es ist Aufgabe der vorliegenden Erfindung, die vorgenannten Probleme im Stand der Technik zu beseitigen und insbesondere eine Gebührenerfassung bzw. ein Online-Charging für MMS in einfacher Weise zu ermöglichen.

Diese Aufgabe wird bei dem Verfahren der eingangs genannten Art dadurch gelöst, daß Nachrichten von einem MMS-Relay über eine Schnittstelle mittels eines CAP (CAMEL Application Part) Protokolls an einen SCP/CSE (Service Control Point/CAMEL Service Environment) und/oder umgekehrt versendet werden.

Weiterhin wird diese Aufgabe bei einem MMS-Relay gelöst durch Mittel zum Verarbeiten, Empfangen und/oder Senden von Nachrichten von einem oder an einen SCP/CSE. Bei einem SCP/CSE wird diese Aufgabe gelöst durch Mittel zum Verarbeiten, Empfangen und/oder Senden von Nachrichten von einem oder an einen MMS-Relay.

Weiterhin wird diese Aufgabe hinsichtlich der Software-Programme durch die Merkmale der unabhängigen Ansprüche 22 und 23 gelöst.

Die Erfindung, die sich insbesondere für GPRS- und UMTS-Dienste einsetzen läßt, beruht darauf, das dem jeweiligen Teilnehmer zugeordnete MMS-Relay über ein CAP Protokoll (CAMEL Application Part) an den SCP (Service Control Point)/CSE (CAMEL Service Environment) anzubinden. SCPs sind Datenbanken, die Informationen hinsichtlich fortgeschrittener Anruf-verarbeitender Möglichkeiten zur Verfügung stellen und die Diensteerbringung zu einem Subscriber (Kunden, Teilnehmer) kontrollieren. CAMEL (Customised Applications for Mobile Network Enhanced Logic) ist ein netzwerkbasierendes Werkzeug, das dem Netzwerkbetreiber hilft, dem Kunden (Subscriber) betreiberspezifische Dienste anzubieten. Dies ist insbesondere auch dann möglich, wenn sich diese Subscriber außerhalb des HPLMN (Home Public Land Mobile Network) befinden (Roaming). So ermöglicht CAMEL z.B. den weltweiten Zugriff zu betreiberspezifischen Intelligent Network-Anwendungen wie bspw. Prepaid und Supervision. Wenn ein Kunde (Subscriber) die CAMEL-Unterstütung benötigt, werden insbesondere die Prozeduren aufgerufen, die dem VPLMN (Visited PLMN) und dem HPLMN die notwendigen Informationen mitteilen.

Um CAMEL einzuführen, ist der CAP (CAMEL Application Part), bestehend aus einem CSE (Camel Service Environment) und einem CCS7 (Common Control Signaling System 7, SS7), erforderlich. SS7 ist eine Architektur zum Informationsaustausch zwischen Telephonnetzen, insbesondere zur Ausführung von out-of-band signaling zur Unterstützung z.B. der Anrufdurchführung, der Rechnungsstellung und dem Routing.

Der wesentliche Gedanke der Erfindung ist nun derjenige, eine Kommunikation zwischen MMS-Relay und SCP/CSE mittels eines CAMEL-Protokollstacks zu realisieren. Zweckmäßigerweise wird hierzu auf dem MMS-Relay ein an das MMS-Relay angepaßtes SSF (Serving Switching Function) implementiert, welches die Kommunikation mit dem SCP/CSE übernimmt. Im folgenden ist dieser SSF mit mmsSSF bezeichnet, um die Zuordnung zum CAMEL-Service zu verdeutlichen. Mittels dieser Ausgestaltung ist es insbesondere möglich, daß das MMS-Relay Daten und/oder Befehle aus dem betreffenden SCP/CSE abfragt, um dann die MM und/oder damit zusammenhängende Daten entsprechend zu behandeln, zu verarbeiten oder solche Aktionen zu vermitteln, z.B. zum Zwecke der Vergebührung. Beispiele hierzu werden weiter unten gegeben. Gegenüber dem Stand der Technik, d.h. der Anbindung des SCP/CSE an ein SGSN (Serving GPRS Support Node) oder ein HLR (Home Location Register) ergibt sich somit der Vorteil einer direkten Kommunikation hinsichtlich nutzerspezifischer Daten durch das MMS-Relay vom SCP/CSE.

Nachdem das MMS-Relay den Kontakt zum SCP/CSE aufgenommen hat, übernimmt bevorzugt der SCP/CSE die logische Steuerung. Vorzugsweise entscheidet also der SCP/CSE über die Behandlung der MMs und sendet Instruktionen zum MMS-Relay über die Behandlung der MMs. Der mmsSSF wird in diesem Fall zum "ausführenden Organ".

Das vorgestellte Prinzip ist eine konsequente Weiterführung der bereits vorhandenen Online Charging Verfahren für leitungsvermittelte (Circuit Switched) oder paketvermittelte (Packet Switched) Datenübertragung und SMS. Es läßt sich leicht in bereits vorhandene PLMN Netzstrukturen integrieren. Die notwendigen Protokoll-Erweiterungen auf SCP Seite sowie die Einführung eines mmsSSF sind ohne größeren Aufwand durchzuführen.

Ein wesentlicher Vorteil, den mmsSSF im MMS-Relay zu implementieren, ist die Möglichkeit eines "Content-Chargings". Hierzu wird dem SCP der MMS-Typ (z.B. MP3, MPEG4, WAV, JPEG, ...) mitgeteilt. Abhängig von dem übermittelten MMS-Typ kann der SCP die MM vergebühren. Weiterhin wird durch die Anbindung an den SCP/CSE via CAMEL-Protokoll ein Roaming zu anderen Netzbetreibern ermöglicht.

Bei einer bevorzugten Ausführungsform der Erfindung setzt das zwischen dem MMS-Relay und dem SCP/CSE zu verwendende CAP Protokoll auf das oben genannte Signaling System No. 7 (SS7) auf. Es kann somit die ohnehin schon vorhandene Architektur des SS7 genutzt werden.

Alternativ setzt das zu verwendende CAP Protokoll auf einem IP-Protokollstack auf, welcher für die HLR-Anbindung mittels eines MAP (Mobile Application Part) Protokolls notwendig ist. MAP / CAP (Phase 4) over IP ist noch in der Standardisierungsphase, wird aber vermutlich für das Release 4 (die Bezeichnung "Release 2000" wird nicht mehr verwendet, Rel. 4 ist mit Rel. 2000 jedoch identisch) verabschiedet werden. Da die PDN (Public Data Network) Struktur auf IP basiert und die Standardisierung für die Zukunft des PLMNs (Public Land Mobile Network) ebenfalls die umfassende Verwendung von IP propagiert, ist ein IPbasierender Protokollstack eine besonders bevorzugte Ausführungsform der Erfindung. Dieses Vorgehen hat zudem den Vorteil, daß es nicht erforderlich ist, einen zusätzlichen Protokollstack im MMS-Relay zu realisieren.

Damit eine sinnvolle Abfrage des SCP/CSE durch das MMS-Relay erfolgen kann, ist es zweckmäßig, daß das MMS-Relay weiß, welche CAMEL-Dienste für den Teilnehmer zur Verfügung stehen. Vorteilhafterweise sind diese Informationen in dem HLR des Teilnehmers abgelegt und werden vom MMS-Relay des Teilnehmers abgefragt. Bei der Abfrage des HLR seitens des MMS-Relays wird dann eine MMS-CSI (CAMEL Subscription Information) übermittelt, welche Subscriber-Informationen enthält. Eine MMS-CSI wird vorzugsweise für versendete (O-MMS-CSI) und empfangene (T-MMS-CSI) MMs vergeben. Anhand dieser MMS-CSI kann das MMS-Relay erkennen, welche(r) CAMEL MMS-Dienst(e) für den Teilnehmer nutzbar sind. Ein solcher Dienst kann z.B. die Prepaid-Nutzung sein. Anhand dieser Informationen kann dann das MMS-Relay den CSP/CSE nach Einzelheiten hinsichtlich dieses Dienstes fragen. Im Falle des genannten Prepaid-Dienstes könnte dies z.B. das noch vorhandene Budget des Teilnehmers sein.

Die Erfindung ist insbesondere einsetzbar zur Ausführung der jeweiligen Verfahrensschritte bei Netzwerkknoten bzw. -elementen vom Typ MMS-Relay und SCP/CSE. Die Implementierung erfolgt durch entsprechende, von der Erfindung mitumfaßte Software-Programme, die auf die genannten Vorrichtungen entsprechend ladbar und/oder auf diesen ablaufbar sind.

Vorteilhafte Weiterbildungen sind durch die Merkmale der Unteransprüche gekennzeichnet.

Im folgenden werden einige Ausführungsbeispiele anhand der Zeichnung näher erläutert. Es zeigen:
- Fig. 1: eine Telekommunikations-Netzwerk-Architektur mit Anbindung eines MMS-Relays an einen SCP/CSE via CAP-Protokoll;
- Fig. 2: einen möglichen Befehlssatz zwischen einem MMS-Relay und einem SCP/CSE;
- Fig. 3: einen Befehlsaustausch zwischen einem MMS-Relay und einem SCP/CSE bei erfolgreicher Vergebührung, und
- Fig. 4: einen Befehlsaustausch zwischen einem MMS-Relay und einem SCP/CSE bei zu geringem Budget.

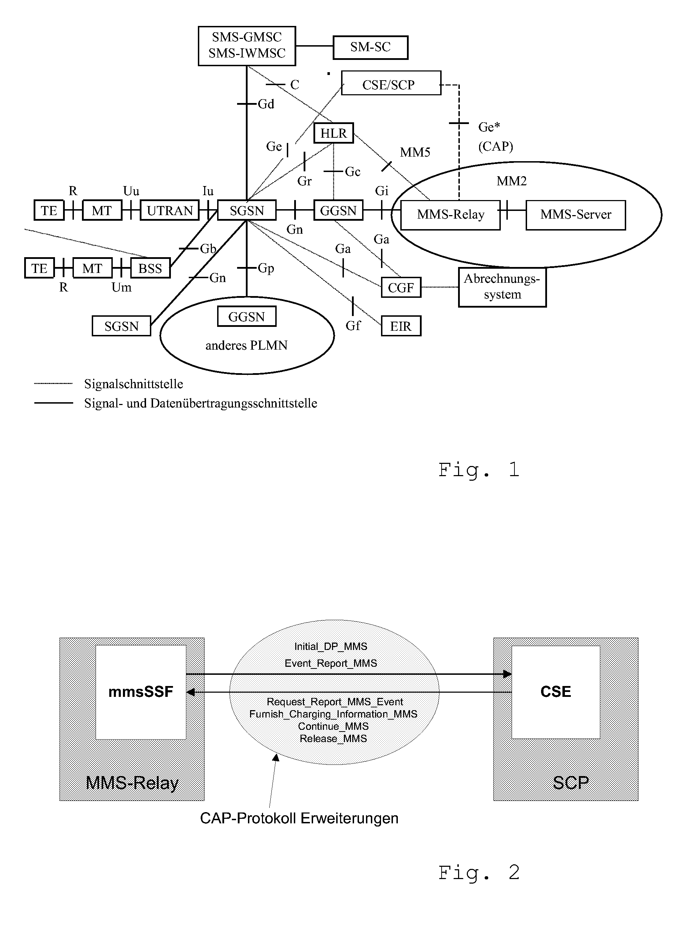

Die Fig. 1 zeigt die Netzwerkarchitektur paketvermittelter Datendienste und die Anbindung eines MMS-Relays, wie sie in vielen Punkten Stand der Technik ist. Die Erfindung ist jedoch nicht auf paketvermittelte Datendienste beschränkt, sondern kann beispielsweise auch bei leitungsvermittelten Datendiensten eingesetzt werden. Insbesondere ist die Erfindung für GPRS und UMTS einsetzbar. Die in der Fig. 1 dargestellte Netzstruktur entspricht im wesentlichen der Architektur, wie sie beispielsweise aus der Fig. 2 der 3G TS23.060 bekannt ist. Zur Erläuterung der vorliegenden Erfindung ist lediglich ein Ausschnitt aus dieser Architektur von Bedeutung. Für weitere Details wird auf die obige Quelle sowie die Spezifikationen ETSI GSM 12.15 V6.2.0 und ETSI TS 32015 V3.4.0 verwiesen.

Ein Endgerät enthält in einem als Mobile Termination MT bezeichneten Teil alle zur Funkübertragung notwendigen Funktionen und weiterhin die Teilnehmerschnittstelle am Terminal TE, über die Ende-zu-Ende-Verbindungen zwischen Anwendungen realisiert werden. R bezeichnet einen Bezugspunkt zwischen einem nicht-ISDN kompatiblen TE und einem MT. Über einen Bezugspunkt Uu ist das MT mit einem Zugangsnetz zur Ermöglichung des Zugangs zum UMTS-Netz verbunden. Das Zugangsnetzwerk, auch AND (Access Network Domain) genannt, kann gemäß Fig. 1 entweder durch ein UTRAN (UMTS Terrestrial Radio Access Network) oder durch ein GSM-BSS (Global System for Mobile Communication - Base Station (Sub)System) realisiert werden. Ein MT kann über das UTRAN mittels einer sog. Iu-Schnittstelle oder über das BSS mittels einer Schnittstelle Gb mit der Core Network Domain verbunden werden.

Die Core Network Domain ist im wesentlichen mittels zweier Netzwerkknoten implementiert. Dies ist einerseits das SGSN (Serving GPRS Support Node) und andererseits das GGSN (Gateway GPRS Support Node). Das SGSN kann somit GPRS sowohl für GSM als auch UMTS unterstützen. Das SGSN und das GGSN sind über eine Schnittstelle Gn miteinander verbunden. Wie im unteren Teil der Fig. 1 angedeutet, kann das SGSN mit weiteren SGSNs oder GGSNs anderer Netze kommunizieren ("anderes PLMN", Public Land Mobile Network).
Das GGSN kann über eine Schnittstelle Gi mit einem MMS-Relay Verbindung aufnehmen, welches über eine Schnittstelle MM2 mit einem MMS-Server (Multimedia Messaging Service - Server) verbunden ist. Das MMS-Relay und der MMS-Server sind Bestandteil eines PDN (Public Data Network).

In einem sog. Home Location Register (HLR) sind üblicherweise Packet Domain (PD) Daten entsprechend den individuellen Daten von einzelnen Teilnehmern und Routing-Informationen enthalten. Hierbei ist das HLR u.a. über eine sog. Gr-Schnittstelle vom SGSN, über eine sog. Gc-Schnittstelle vom GGSN und über eine sog. MM5-Schnittstelle von einem MMS-Relay zugänglich.

Es ist vorgesehen, daß die HLR-Funktionalität heutiger PLMN-Netze von einem HSS (Home Subscriber Server) übernommen bzw. ergänzt wird. Die entsprechenden Protokolle und Schnittstellen sind dann hieran anzupassen. Zwar wird die Erfindung im folgenden anhand des Einsatzes eines HLR erläutert; grundlegende Unterschiede gegenüber dem Einsatz eines HSS bestehen aber nicht.

Gebührendatensätzen (Charging Records), die Informationen über die in Anspruch genommenen Dienstleistungen enthalten (s. bspw. ETSI GSM 12.15 V6.2.0 und ETSI TS 132015 V3.4.0) werden von den SGSN und GGSN erstellt und zu einem Abrechnungssystem, dem sog. Billing System (BS), des Netzbetreibers übertragen. Gebühreninformationen werden vorzugsweise für jede Mobilstation durch die SGSNs und GGSNs, die diese Mobilstation bedienen, gesammelt. Der SGSN sammelt für jede MS Gebühreninformationen, die mit der Nutzung des Funknetzwerks zusammenhängen, während der GGSN für jede Mobilstation Gebühreninformationen sammelt, die mit der Nutzung des externen Datennetzwerks zusammenhängen. Die Schnittstelle zwischen GPRS und dem externen Paketdatennetzwerk wird mit Gi bezeichnet. Zudem sammeln beide Knoten, SGSN und GGSN, teilnehmerbezogene Gebühreninformationen betreffend die Nutzung der GPRS Netzwerkresourcen. Auch in den Elementen des Multimedia Messaging Services (MMS) ist es vorgesehen, daß CDRs erzeugt werden. Die Möglichkeit, CDRs in einem MMS-Relay zu erzeugen, ist in 3G TS22.140V4.0.1 (§8) und in 3G TS23.140V4.1.0 (§5.3) beschrieben.

In einem SCP (Switching Control Point) mit einem CSE (CAMEL Service Environment) sind benutzerspezifische Daten abgelegt, z.B. Informationen über die Höhe des Guthabens eines Teilnehmers eines Prepaid-Dienstes. Zur Datenübertragung zu anderen Netzwerkelementen wird eine sog. CAMEL (Customised Applications for Mobile Network Enhanced Logic) Architektur bzw. ein CAP Protokoll (CAMEL Application Part) verwendet.

Der Informationsfluß zwischen SGSN und SCP/CSE wird bevorzugt folgendermaßen initialisiert: Das SGSN erhält vom HLR Informationen über das Vorhandensein eines speziellen Dienstes. Beispielsweise wird vom HLR eine Bestätigung oder eine Verneinung hinsichtlich der Nutzungsberechtigung des Teilnehmers an das SGSN übermittelt und dort überprüft, ob der Benutzer überhaupt die Berechtigung hat, abgehende Multimedia-Nachrichten zu verschicken (sog. Subscription Check). Gleichfalls kann im HLR abgelegt sein, ob der Teilnehmer ein Prepaid-Nutzer ist. Diese Informationen werden über eine Schnittstelle Gr an das SGSN weitergeleitet. Dieses kann dann über eine Schnittstelle Ge vom SCP/CSE z.B. das Guthaben des Teilnehmers erfahren und entsprechend die Weiterleitung einer MM an das GGSN veranlassen oder verhindern.

Erfindungsgemäß ist nun zur Kommunikation zwischen dem MMS-Relay und dem CSP/CSE ebenfalls eine Datenübertragung möglich. Hierzu wird eine neue Schnittstelle benötigt, die hier mit Ge* bezeichnet sei. Die Kommunikation über diese Schnittstelle geschieht ebenfalls mittels eines CAP Protokolls.
Gemäß der Erfindung wird ein bereits im MMS-Relay für die HLR-Anbindung gefordertes SS7 oder alternativ ein IP Protokollstack verwendet und ein darauf aufsetzendes CAMEL Protokoll für MMS-spezifische Nachrichten (Operationen) erweitert. Zur Behandlung dieser Nachrichten wird zweckmäßigerweise in dem MMS-Relay ein mmsSSF eingeführt. Ein bereits bestehender gsmSCF im SCP/CSE muß um die entsprechenden Nachrichten erweitert werden. Damit der MMS-Relay erkennen kann, ob es sich bei dem Teilnehmer bspw. um einen Prepaid Teilnehmer handelt, fragt das MMS-Relay Subscriber-Informationen vom HLR ab. Diese Subscriber-Informationen müssen um eine sogenannte MMS-CSI (CAMEL Subscriber Information) erweitert werden. Der Unterschied zum Stand der Technik besteht darin, daß nicht nur das SGSN Informationen vom SCP/CSE erhalten kann, sondern auch das MMS-Relay. Hierdurch wird es dem MMS-Relay ermöglicht, dem SCP/CSE insbesondere gebührenrelevante Daten zu übermitteln, die dieser verarbeitet und ggf. eine Nachricht an das MMS-Relay zurücksendet. Gleichfalls kann ein sog. Content Charging im SCP/CSE realisiert werden. Hierbei erhält das SCP/CSE vom MMS-Relay Informationen über den übermittelten MMS-Typ und die Größe der MMS (z.B. MP3-Datei mit einer Größe von 3 MByte). Art und Größe bestimmen in diesem Fall die Höhe der dem Teilnehmer berechneten und von seinem Konto abzuziehenden Gebühren. Des weiteren ist wegen der Verwendung des CAP-Protokolls ebenfalls ein Roaming möglich.

Vorteilhafterweise werden gemäß der Fig. 2 eine oder mehrere der folgenden Nachrichten zum Zwecke des MMS Online Charging in den CAMEL Standard (3GPP TS 23.078, 3GPP TS 29.078) eingefügt. Die Namen sind hierbei zweckmäßig gewählt und keineswegs zwingend.
- *Initial_DP_MMS* (vom MMS-Relay zum SCP/CSE)
   Die Nachricht wird in dem MMS-Relay erzeugt und an den gsmSCF gesendet, wenn von dem mmsSSF, welcher in dem MMS-Relay liegt, eine MM von einem Prepaid Teilnehmer erkannt wurde. In dieser Nachricht werden dem SCP/CSE gebührenrelevante Informationen mitgeteilt, wie z.B. MMS-Volumen (kByte), ein Zeitstempel und der MMS-Type (s. 23.240v410 §5.1.2). Durch die Übermittlung des MMS-Typs wird es dem SCP/CSE ermöglicht, ein Content Charging durchzuführen. Der MMS-Relay wartet nun auf weitere Anweisungen vom SCP/CSE.
- *Request_Report_MMS_Event* (vom SCP/CSE zum MMS-Relay)
   Mit dieser Nachricht kann der SCP/CSE den Bericht über weitere Ereignisse anfordern. Hierzu kann die erfolgreiche Zustellung der MM zum Empfänger oder die erfolgreiche Speicherung der MM im MMS-Server gehören.
- *Event_Report_MMS* (vom MMS-Relay zum SCP/CSE)
   Mit dieser Nachricht wird der SCP/CSE über das Eintreten eines Ereignisses informiert. Ein mögliches Ereignis ist das erfolgreiche oder fehlerhafte Zustellen bzw. Speichern einer MM zum bzw. im UE/MMS-Server. Durch Abfrage dieser Ereignisse kann sichergestellt werden, daß dem Prepaid Teilnehmer keine MM vergebührt werden, die z.B. aufgrund von Netzproblemen (PLMN, PDN) nicht zugestellt werden konnten.
- *Furnish_Charging_Information_MMS* (vom SCP/CSE zum MMS-Relay)
   Mit Hilfe dieser Nachricht können weitere Zusatzinformationen vom SCP/CSE in den Gebührendatensätzen (Charging Data Records, CDR) abgespeichert werden. Es können mehrere FCIs (Furnish Charging Information) mit einer maximalen Länge von 160 Octets versendet werden. Diese Beschreibung lehnt sich an die bestehende SMS Spezifikation in der 3GPP TS 23.078 §7.6.2.3 an.
- *Continue_MMS* (vom SCP/CSE zum MMS-Relay)
   Anhand der vom MMS-Relay übermittelten Gebühren-Informationen wird die MM des Prepaid Teilnehmers vergebührt, sein vorhandenes Budget also reduziert. Mit der Nachricht *Continue_MMS* wird dem MMS-Relay erlaubt, die MM zuzustellen. Die Nachricht *Continue_MMS* wird allgemein verwendet, um einem SSF mitzuteilen, daß er seine Verarbeitung fortführen kann. Dies gilt für die "Event-" und "Trigger Detection Points", die im Request Mode "armiert" worden sind, siehe (Request Modes, s. 3GPP TS 23.078).
- *Release_MMS* (vom SCP/CSE zum MMS-Relay)
   Wenn der SCP/CSE anhand der übertragenen Gebühren-Informationen festgestellt hat, daß das auf dem SCP/CSE verfügbare Budget nicht mehr ausreicht, um die MM zuzustellen, wird dem MMS-Relay anhand der Nachricht *Release_MMS* mitgeteilt, daß die Nachricht nicht zugestellt werden darf.

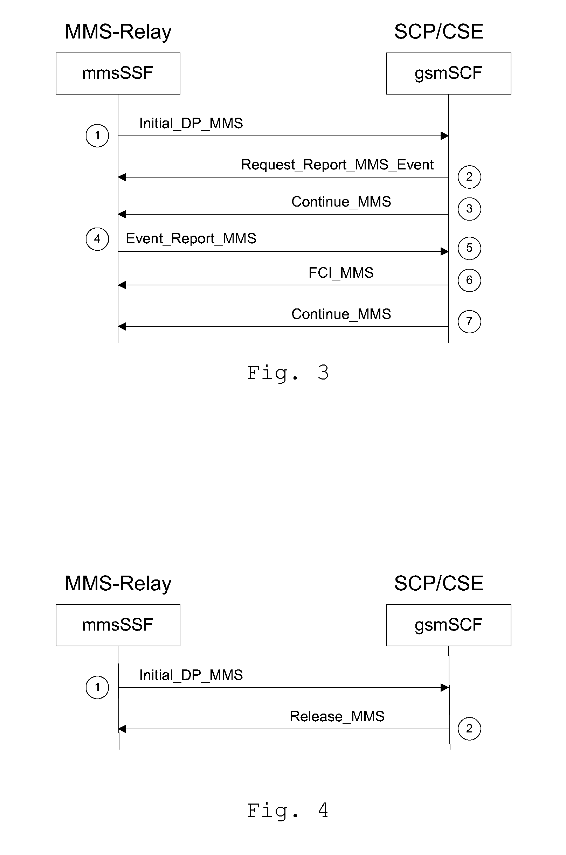

Anhand der Fig. 3 und 4 werden zwei entsprechende Beispiele näher erläutert.

Die Fig. 3 zeigt den Nachrichtenaustausch zwischen einem MMS-Relay und einem SCP/CSE bei erfolgreicher Vergebührung einer MM. Folgender Nachrichten- oder Operationsablauf wird vorteilhafterweise gemäß der Fig. 3 bei erfolgreicher Vergebührung durchlaufen:
1. Das MMS-Relay stellt fest, daß ein Prepaid Teilnehmer eine MM versenden möchte. Das Zustellen der MM wird unterbrochen. Das MMS-Relay baut eine Verbindung zum SCP/CSE auf und fordert mittels der Operation *Initial_PD_MMS* weitere Instruktionen vom SCP/CSE an.
2. Der SCP/CSE kann nun optional mittels der Operation *Request_Report_MMS_Event* die Mitteilung über bestimmte Ereignisse ("Event Detection Points") anfordern. Hier kann z.B. eine Bestätigung für das erfolgreiche Abspeichern der MM auf dem MMS-Server angefordert werden. Anstelle des Abfragemodus (Request Mode, s. 3GPP TS 23.078) kann auch eine Übertragung von Ereignismitteilungen vom MMS-Relay an den SCP/CSE ohne spezielle Anforderung erfolgen.
3. Mit der Operation *Continue_MMS* wird dem mmsSSF/MMS-Server mitgeteilt, daß ausreichend Budget vorhanden ist, um diese MM zu vergebühren, und daß die MM zugestellt werden darf.
4. Das MMS-Relay bestätigt in der Operation *E-vent_Report_MMS* z.B. das erfolgreiche Speichern der MM auf einem MMS-Server.
5. Dem Prepaid Teilnehmer wird jetzt das Zustellen einer MM auf dem SCP/CSE vergebührt.
6. Der SCP/CSE übermittelt mittels der Operation *FCI_MMS* optional dem mmsSSF Gebühreninformationen, die in das CDR (Gebührenticket bzw. Gebührendatensatz) des MMS-Relays zusätzlich eingetragen werden sollen.
7.Mit der Operation *Continue_MMS* wird dem mmsSSF mitgeteilt, daß er mit der Verarbeitung fortfahren kann (nur im Request Mode) und die SS7/IP Verbindung zum SCP/CSE abgebaut werden soll.

Die Fig. 4 stellt die zwischen dem MMS-Relay und dem SCP/CSE ausgetauschten Nachrichten bzw. Operationen für den Fall einer abgewiesenen MM aufgrund zu geringen Budgets dar.
1. Das MMS-Relay stellt fest, daß ein Prepaid Teilnehmer eine MM versenden möchte. Das Zustellen der MM wird unterbrochen. Das MMS-Relay baut eine Verbindung zum SCP/CSE auf und fordert mittels der Operation *Initial_PD_MMS* weitere Instruktionen vom SCP an.
2. Der SCP/CSE stellt fest, daß das Budget des Prepaid Teilnehmers aufgebraucht ist. Mit der Operation *Release_MMS* wird dem mmsSSF mitgeteilt, daß er die Anforderung, diese MM zuzustellen, zurückweisen soll.

Die Erfindung kann sowohl für ausgehende (originated) als auch für eingehende (terminated) MMs eingesetzt werden. Im ersten Fall kommuniziert das MMS-Relay des Absenders mit seinem SCP/CSE, im zweiten Fall das MMS-Relay des Empfängers mit dem entsprechenden SCP/CSE. Die beiden MMS-Relays von Sender und Empfänger und/oder die beiden SCP/CSE können auch identisch sein.

Hinsichtlich der Vorrichtungen umfaßt die Erfindung insbesondere die Zurverfügungstellung der notwendigen Mittel zum Empfangen, Verarbeiten und/oder Senden der besagten Nachrichten. Hierzu sind entsprechende Prozessormittel sowie Sende- und/oder Empfangsvorrichtungen - allgemein Kommunikationseinrichtungen - vorzusehen.

Unter den beschriebenen und beanspruchten Netzwerkkomponenten einschließlich der Schnittstellen, Protokolle und Verbindungen untereinander sind auch diejenigen zukünftiger Entwicklungen zu verstehen, die im wesentlichen die gleichen Aufgaben haben werden wie die hier beschriebenen.

## Patentansprüche

1. Verfahren zur Nachrichtenübermittlung zwischen Telekommunikations-Netzwerkelementen, die bei MMS (Multimedia Service)-Diensten beteiligt sind,
**dadurch gekennzeichnet,**
**daß** Nachrichten von einem MMS-Relay über eine Schnittstelle (Ge*) mittels eines CAP (CAMEL Application Part) Protokolls an einen SCP/CSE (Service Control Point/CAMEL Service Environment) und/oder umgekehrt versendet werden.

2. Verfahren nach Anspruch 1,
**dadurch gekennzeichnet,**
**daß** die Nachrichtenübermittlung mit Hilfe eines im MMS-Relay implementierten SSF (Serving Switching Function, mmsSSF) erfolgt.

3. Verfahren nach einem der vorhergehenden Ansprüche,
**dadurch gekennzeichnet,**
**daß** die Nachrichtenübermittlung mit Hilfe eines im SCP/CSE implementierten SCF (Serving Control Function, gsmSSF) erfolgt.

4. Verfahren nach einem der vorhergehenden Ansprüche,
**dadurch gekennzeichnet,**
**daß** das CAP Protokoll auf das SS7 (Signaling System No. 7) aufsetzt.

5. Verfahren nach einem Ansprüche 1 bis 3,
**dadurch gekennzeichnet,**
**daß** das CAP Protokoll auf einen IP (Internet Protocol)-Protokollstack aufsetzt.

6. Verfahren nach einem der vorhergehenden Ansprüche,
**dadurch gekennzeichnet,**
**daß** das MMS-Relay vom HLR (Home Location Register) oder vom HSS (Home Subscriber Server) hinsichtlich der dem Teilnehmer zur Verfügung stehenden CAMEL MMS-Dienste entsprechende MMS-CSI (Charging Subscription Information) anfordert und/oder empfängt.

7. Verfahren nach Anspruch 6,
**dadurch gekennzeichnet,**
**daß** das MMS-Relay MMS-CSI für versendete MMs (Multimedia Messages; O-MMS-CSI, Originated Multimedia Messaging Service Charging Subscription Information) und/oder empfangene MMs (T-MMS-CSI, Terminated Multimedia Service Charging Subscription Information) anfordert und/oder empfängt.

8. Verfahren nach einem der vorhergehenden Ansprüche,
**dadurch gekennzeichnet,**
**daß** nach Kontaktaufnahme durch das MMS-Relay zum SCP/CSE der SCP/CSE die logische Steuerung übernimmt und Instruktionen zum MMS-Relay über die Behandlung der MM sendet.

9. Verfahren nach einem der vorhergehenden Ansprüche,
**dadurch gekennzeichnet,**
**daß** vom MMS-Relay zum SCP/CSE eine oder mehrere der folgenden Nachrichten übermittelt werden:
- gebührenrelevante Informationen, z.B. MMS-Volumen, Zeitstempel und/oder MMS-Typ (*Initial_DP_MMS) ;*
- Ereignisse betreffend die Verarbeitung einer MM, z.B. Zustellung und/oder Versendung (*Request_Report_MMS_Event*).

10. Verfahren nach einem der vorhergehenden Ansprüche,
**dadurch gekennzeichnet,**
**daß** vom SCP/CSE zum MMS-Relay eine oder mehrere der folgenden Nachrichten übermittelt werden:
- Anforderung an das MMS-Relay zur Übersendung von bestimmten Ereignissen, z.B. ob eine erfolgreiche Speicherung und/oder Zusendung der MM erfolgt ist (*Request_Report_MMS_Event*);
- Zusatzinformationen zur Abspeicherung in Gebührendatensätzen im MMS-Relay (*Event_Report_MMS*);
- Erlaubnis, eine MM zuzustellen (*Continue_MMS*);
- Mitteilung, eine MM nicht zuzustellen (*Release_MMS*).

11. Verfahren nach einem der vorhergehenden Ansprüche,
**dadurch gekennzeichnet,**
**daß** im SCP eine Vergebührung zu Lasten eines Teilnehmerkontos aufgrund der Inanspruchnahme eines MMS-Dienstes durch einen MM-Absender und/oder MM-Empfängers vorgenommen wird.

12. Verfahren nach einem der vorhergehenden Ansprüche,
**dadurch gekennzeichnet,**
**daß** die Vergebührung Art (MMS-Typ, z.B. MP3, MPEG4, WAVm JPEG) und/oder Umfang (Dateiengröße) der MM betrifft.

13. MMS-Relay,
**gekennzeichnet durch**
Mittel zum Verarbeiten, Empfangen und/oder Senden von Nachrichten von einem oder an einen SCP/CSE.

14. MMS-Relay nach Anspruch 13,
**dadurch gekennzeichnet,**
**daß** eine oder mehrere der folgenden Nachrichten an den SCP/CSE versendbar sind:
- gebührenrelevante Informationen, z.B. MMS-Volumen, Zeitstempel und/oder MMS-Typ (*Initial_DP_MMS*);
- Ereignisse betreffend die Verarbeitung einer MM, z.B. Zustellung und/oder Versendung (*Request_Report_MMS_Event*).

15. MMS-Relay nach Anspruch 13 oder 14,
**dadurch gekennzeichnet,**
**daß** ein mmsSSF (Service Switching Function) implementiert ist.

16. MMS-Relay nach einem der Ansprüche 13 bis 15,
**gekennzeichnet durch**
Mittel zur Kommunikation mit dem SCP/CSE über ein CAP-Protokoll, das auf ein SS7 oder einen IP-Protokollstack aufsetzt, welches auch für die HLR- oder HSS-Anbindung über ein MAP-Protokoll verwendet wird.

17. MS-Relay nach einem der Ansprüche 13 bis 16,
**gekennzeichnet durch**
Mittel zur Anforderung, zum Empfang und/oder zur Verarbeitung von MMS-SCI (CAMEL Subscription Information) von einem HLR oder einem HSS über eine Schnittstelle (MM5).

18. SCP/CSE,
**gekennzeichnet durch**
Mittel zum Verarbeiten, Empfangen und/oder Senden von Nachrichten von einem oder an einen MMS-Relay.

19. SCP/CSE nach Anspruch 18,
**dadurch gekennzeichnet,**
**daß** eine oder mehrere der folgenden Nachrichten an das MMS-Relay versendbar sind:
- Anforderung an das MMS-Relay zur Übersendung von bestimmten Ereignissen, z.B. ob eine erfolgreiche Speicherung und/oder Zusendung der MM erfolgt ist (*Request_Report_MMS_Event*);
- Zusatzinformationen zur Abspeicherung in Gebührendatensätzen im MMS-Relay (*Event_Report_MMS*);
- Erlaubnis, eine MM zuzustellen (*Continue_MMS*);
- Mitteilung, eine MM nicht zuzustellen (*Release_MMS*).

20. SCP/CSE nach Anspruch 18 oder 19,
**dadurch gekennzeichnet,**
**daß** ein gsmSCF (Service Control Function) implementiert ist, daß zum Zwecke der Verarbeitung, des Empfangs und/oder der Übermittlung einer oder mehrerer der Nachrichten nach Anspruch 9 und/oder 10 entsprechend erweitert ist.

21. SCP/CSE nach einem der Ansprüche 18 bis 20,
**gekennzeichnet durch**
Mittel zur Kommunikation mit dem MMS-Relay über ein CAP-Protokoll, das auf ein SS7 oder einen IP-Protokollstack aufsetzt, welches auch für die HLR- oder HSS Anbindung über ein MAP-Protokoll verwendet wird.

22. Software-Programm, welches auf einer Vorrichtung, insbesondere einer Vorrichtung nach einem der Ansprüche 13 bis 21, derart ablaufen kann, daß das Software-Programm mitsamt der Vorrichtung die Verfahrensschritte auf der Seite des MMS-Relays oder des SCP/CSE gemäß einem der Ansprüche 1 bis 12 ausführt.

23. Software-Programm, welches in eine Vorrichtung, insbesondere einer Vorrichtung nach einem der Ansprüche 13 bis 21, ladbar ist, so daß die derart programmierte Vorrichtung fähig oder angepaßt ist, Verfahrensschritte auf der Seite des MMS-Relays oder des SCP/CSE gemäß einem der Ansprüche 1 bis 12 auszuführen.
